# EUROPÄISCHE PATENTSCHRIFT

(11) **EP 2 673 207 B1**
(45) Veröffentlichungstag und Bekanntmachung des Hinweises auf die Patenterteilung: **03.10.2018**
(21) Anmeldenummer: 12706433.5
(22) Anmeldetag: 09.02.2012
(51) Int. Cl.: B65D 30/18, B29C 65/02, B31B 70/60

(54) **VERFAHREN ZUM VERSCHLIEßEN EINES SCHLAUCHFÖRMIGEN SACKKÖRPERS**
METHOD FOR CLOSING A TUBULAR SACK BODY
PROCÉDÉ DE FERMETURE D'UN CORPS DE SAC TUBULAIRE

(30) Priorität: 09.02.2011 AT 1732011
(43) Veröffentlichungstag der Anmeldung: 18.12.2013
(73) Patentinhaber: LOHIA CORP LIMITED, Kanpur, Uttar Pradesh 208022 (IN)
(72) Erfinder: WORFF, Herwig, A-4810 Gmunden (AT); SCHOBESBERGER, Ernesto, A-1040 Wien (AT)
(74) Vertreter: Müller-Boré & Partner Patentanwälte PartG mbB
(86) Internationale Anmeldenummer: PCT/AT2012/000024
(87) Internationale Veröffentlichungsnummer: WO 2012/106742

(56) Entgegenhaltungen:
- DE-U1-202009 007 915
- FR-A- 1 385 012
- US-A- 3 397 622

## Beschreibung

Die Erfindung betrifft ein Verfahren zum Verschließen eines schlauchförmigen Sackkörpers aus einem Gewebe aus monoaxial verstreckten Polymer-, insbesondere Polyolefin- oder Polypropylenbändchen, umfassend das Herstellen einer Bodenfaltung derart, dass der Sack einen im Wesentlichen rechteckigen Boden aufweist.

Der schlauchförmige Körper eines derartigen Sackes wird üblicherweise aus einem schlauchartigen Rundmaterial oder einem an den Längsrändern zu einem Schlauch verbundenen Flachmaterial gebildet. Eine grobe Einteilung solcher Säcke wird durch die Unterscheidung in Kissen- und Kastenform getroffen. Eine Kissenform von Säcken entsteht üblicherweise durch Konfektionierung der Böden mit einer Textilnaht oder einer Schweißnaht. Die vorliegende Erfindung befasst sich mit kastenförmigen Säcken, bei denen wenigstens ein Ende eine Bodenfaltung aufweist, sodass der Sack einen im Wesentlichen rechteckigen Boden aufweist. Wenn beide Enden des Sackes eine Bodenfaltung aufweisen, spricht man von Kastensäcken. Bei Säcken, die an einer Seite dem Kissensack und an der anderen Seite dem Kastensack entsprechen, spricht man von einer Quasi-Kastenform. Die vorliegende Erfindung schließt sowohl Kastensäcke als auch Quasi-Kastensäcke ein.

Typische Säcke haben ein Fassungsvermögen von 10, 25, 50, 100, 500 und 1000 kg. Säcke aus Kunststoffgewebe aus monoaxial verstreckten Bändchen weisen die höchste Festigkeit auf und sind formstabil. Das Gewebe besteht dabei aus monoaxial verstreckten Polymer-, insbesondere Polyolefin- oder Polypropylenbändchen. Diese Bändchen werden durch Streckung von Polymer-, insbesondere Polyolefin- oder Polypropylenfolien üblicherweise auf das vier- bis zehnfache hergestellt, wodurch die Molekülketten in Bändchenlängsrichtung ausgerichtet werden und in diese Richtungen ca. die sechs- bis zehnfache Festigkeit gegenüber der ursprünglichen Folie aufweisen. Die Bändchenbreite beträgt üblicherweise ca. 1,5 bis 10 mm, die Dicke 20 bis 80 µm. Zur Erzielung von Staub- und Feuchtigkeitsdichtheit kann dabei auf das Gewebe ein- oder zweiseitig eine Beschichtung aus Schmelze aus vorzugsweise demselben Material wie die Bändchen aufgetragen werden.

Im Zusammenhang mit eine Kastenform aufweisenden Säcken sind bereits verschiedene Verfahren zum Verschließen der Böden bekannt geworden. Meist wird der gefaltete Boden nach dem Stand der Technik mit einem Mehrkomponentenkleber aufwendig verklebt, da Polypropylen- und Polyäthylen-Materialien, aus denen das Gewebe üblicherweise besteht, sich nur unter Schwierigkeiten verkleben lassen. Neben der umständlichen Verklebungsprozedur weisen die bekannten Kleber weitere Nachteile wie geringe Haltbarkeit, Sprödigkeit infolge von Temperaturwechsel und Verlust der Haftwirkung durch Feuchtigkeitseinflüsse auf. In der WO 95/30598 A1 ist in diesem Zusammenhang ein verbessertes Verfahren beschrieben, bei dem mindestens ein Sackende, insbesondere eine Bodenfläche, über eine Zwischenschicht aus, insbesondere thermoplastischem, Kunststoff-, insbesondere Polyolefin-, vorzugsweise Polypropylenmaterial durch Wärmeeinwirkung mit einem Deckblatt aus Gewebe aus monoaxial verstreckten Polymer-, insbesondere Polyolefin-, vorzugsweise Polypropylenbändchen, verbunden wird und bei dem nur der außen befindliche Oberflächenbereich, insbesondere weniger als 30% der Materialdicke der Gewebebändchen, von Bodenfläche und Deckblatt infolge der Wärmeeinwirkung desorientierte Moleküle aufweist, wobei im übrigen Materialbereich die Molekülorientierung vorhanden ist. Nachteilig bei diesem Verfahren ist die Kontrolle und Begrenzung der Wärmeeinwirkung derart, dass tatsächlich nur der außen befindliche Oberflächenbereich entsprechend erhitzt und von einer Desorientierung der Moleküle betroffen ist. Bereiche des Gewebes mit desorientierten Molekülen haben im Vergleich zu Bereichen mit durch die Verstreckung des Materials orientierten Molekülen eine wesentlich geringere Festigkeit. Nachteilig bei diesem Verfahren ist weiters, dass entweder eine gewisse Mindeststärke des Gewebes oder eine ausreichend dicke Beschichtung des Gewebes erforderlich ist, um die Verschweißung zu ermöglichen. Dies hat ein relativ hohes Gewicht des Sackes und höhere Kosten zur Folge.

US 4,373,979 beschreibt die Herstellung von Säcken aus Polymergewebe, wobei Schweißnähte durch Ultraschallverschweißen erzeugt werden. US 3,237,534 beschreibt ein Verfahren zum Verschließen eines schlauchförmigen Sackkörpers.

Die vorliegende Erfindung zielt daher darauf ab, ein Verfahren zum Verschließen eines Sackes bereitzustellen, mit welchem die oben genannten Probleme vermieden werden können und bei welchem gleichzeitig ein sicherer und einfach herzustellender Sackverschluss gewährleistet ist.

Diese Aufgabe wird durch ein Verfahren gemäß Anspruch 1 gelöst.

Das erfindungsgemäße Verfahren wird derart durchgeführt, dass wenigstens zwei einander wenigstens teilweise überlappende Lagen des Bodens zum Verschließen des Bodens im Bereich ihrer Überlappung mit zumindest einer Schweißnaht miteinander verschweißt werden, wobei sich die wenigstens eine Schweißnaht zumindest über die Länge der Breit- und/oder der Schmalseite des rechteckigen Bodens erstreckt.

Erfindungsgemäß werden die Lagen der Bodenfaltung somit nicht flächendeckend verschweißt, sondern lediglich entlang wenigstens einer diskreten Schweißnaht, wobei bevorzugt mehrere diskrete Schweißnähte vorgesehen sind. Dabei kann in Kauf genommen werden, dass das Gewebe im Bereich der wenigstens einen Schweißnaht auf Grund der Desorientierung der Moleküle geschwächt wird. Trotz der Schwächung des Gewebes ist eine ausreichende Stabilität der Schweißverbindung ohne die Gefahr eines Reißens des Gewebes gewährleistet, insbesondere dann, wenn die Schweißnähte so angeordnet sind, dass sie lediglich auf Scherung, nicht aber auf Schälung belastet sind. Bei einer Scherbelastung wirken auf die Schweißnaht lediglich Kräfte in der Ebene des Gewebes. Bei einer Schälbelastung würden die Kräfte hingegen quer zur Ebene des Gewebes auf die Schweißnaht wirken, was zu einer Zerstörung der Schweißnaht führen kann.

Als Schweißnaht im Sinne der vorliegenden Erfindung wird beispielsweise eine Verschweißung entlang eines länglichen Bereichs verstanden, dessen Länge im Vergleich zur Breite um ein Vielfaches größer ist.

Die Schweißnaht muss nicht geradlinig verlaufen, sondern kann beispielsweise auch gekrümmte bzw. gekurvte Bereiche oder Richtungsänderungen aufweisen. Besonders vorteilhaft ist es, wenn die Schweißnaht schräg zur Bändchenrichtung verläuft bzw. schräg verlaufende Abschnitte aufweist. Die Schweißnaht kann beispielsweise zick-zack förmig verlaufen. Bei einer zick-zack Verschweißung, deren einzelne Abschnitte schräg zur Richtung der Gewebebändchen verlaufen, werden die einzelnen Bändchen nur zu einem geringen Ausmaß geschwächt.

Die Gefahr eines Reißens des Gewebes kann mit Vorteil auch dadurch verringert werden, dass die Verschweißung zur Ausbildung einer Schweißnaht mit einer Vielzahl von in Abstand voneinander angeordneten Schweißstellen vorgenommen wird. Es wird somit eine nicht durchgehende Schweißnaht gebildet, sodass Rissfortpflanzungslinien vermieden werden. Erfindungsgemäß wird die Schweißnaht hierbei als Ultraschallverschweißung vorgenommen. Die Ultraschallverschweißung erlaubt es hierbei, in einfaeher Weise definierte Schweißstellen zu erhalten, sodass der von der Verschweißung betroffene Anteil des Gewebes im Bereich der Schweißnaht reduziert werden kann. Dadurch, dass die Schweißnaht eine Vielzahl von in Abstand voneinander angeordneten Schweißstellen umfasst, bevorzugt aus diesen besteht, wird das Gewebe nur stellenweise durch die Schweißung geschwächt, wobei die Festigkeit zwischen den einzelnen Schweißstellen gänzlich erhalten bleibt. Da somit durch die Verschweißung in nur geringem Ausmaß die Ausrichtung der Molekülketten verloren geht, erleidet das Gewebe kaum Festigkeitseinbußen. Dabei kann auch der Effekt ausgenützt werden, dass die sich um die einzelnen Schweißstellen Schmelze ansammelt, welche die mechanische Belastung zusätzlich aufnimmt.

Bevorzugt wird dabei derart vorgegangen, dass die Schweißstellen punktförmig ausgebildet werden, wobei bevorzugt die Schweißstellen quer zur Bändchenrichtung gegeneinander versetzt angeordnet werden. Durch die versetzte Anordnung der Schweißstellen wird die Entstehung von Rissfortpflanzungslinien wirksam verhindert. Die Schweißstellen können beispielsweise in mehreren Reihen angeordnet werden, wobei die Schweißstellen einer Reihe zu den Schweißstellen einer benachbarten Reihe auf Lücke angeordnet sind.

Beim Kunststoff-Ultraschallschweißen wird den zu verschweißenden Bändchen des Gewebes durch hochfrequente mechanische Schwingungen an den Schweißstellen Wärme zugeführt, wodurch das Material aufgeschmolzen oder zumindest erweicht wird. Dabei weisen die Fügekraft und die Ultraschallschwingung dieselbe Wirkrichtung auf. Die eingeleiteten Longitudinalwellen bewirken eine Druckschwellbeanspruchung im Werkstoff und in der Fügezone, die zu einer Plastifizierung des Kunststoffes führt. Bei Beendigung der Energieeinschallung kühlt das Material an den Schweißstellen unter Druck ab und es entsteht eine dauerhafte, mechanisch stabile Verbindung.

Bevorzugt wird so vorgegangen, dass die Vielzahl von in Abstand voneinander angeordneten Schweißstellen in einer Dichte von höchstens 15, bevorzugt höchstens 10, bevorzugt höchstens 5 Schweißstellen pro cm² aufgebracht wird.

Vorteilhaft bei der erfindungsgemäßen Verfahrensweise ist, dass es keine durch Nadelperforierung des Gewebes verursachte Schwachstellen gibt. Außerdem ist das Verschweißen mit niedrigen Kosten verbunden und zeichnet sich durch eine hohe Arbeitsgeschwindigkeit aus. Mit dem erfindungsgemäßen Verfahren können deutlich mehr Säcke pro Minute verschlossen werden als mit den aus dem Stand der Technik bekannten Verfahren. Die Schweißverbindung ist keiner Alterung oder Versprödung unterworfen. Es gibt darüber hinaus einfache Entsorgungsmöglichkeiten, da der Sack ausschließlich aus sortenreinem Material besteht.

Um den Boden des Sackes lediglich mittels der erfindungsgemäßen Verschweißung verschließen zu können, d.h. ohne weitere Maßnahmen, wie z.B. Klebeverbindungen, vollflächige Verschweißungen oder dgl. ist eine Mehrzahl von Schweißnähten erforderlich. Insbesondere sind die Schweißnähte dabei so angeordnet, dass wenigstens eine Schweißnaht sich im Wesentlichen über die Länge der Schmalseite des rechteckigen Bodens und wenigstens eine Schweißnaht sich im Wesentlichen über die Länge der Breitseite des rechteckigen Bodens erstreckt. Die Schweißnähte können dabei als gesonderte, voneinander getrennte Schweißnähte ausgebildet sein. Es ist aber auch denkbar, dass die Schweißnähte aneinander anschließen, sodass in diesem Fall von einer einzigen Schweißnaht mit einer entsprechenden Anzahl von aneinander anschließenden Abschnitten gesprochen werden könnte. Die Schweißnähte können zeitlich hintereinander hergestellt werden oder auch gleichzeitig.

Die Bezugnahme auf die Schmalseite und die Breitseite des Sackbodens umfasst auch Ausführungen mit quadratischem Boden. Die Begriffe Schmalseite und Breitseite sind somit nicht als Längenangaben zu verstehen, sondern dienen lediglich der begrifflichen Unterscheidung des einen Paars von gegenüberliegenden Seiten des Bodens vom anderen Paar der gegenüberliegenden Seiten.

Im Rahmen der Erfindung ist eine Vielzahl von Anordnungen der Schweißnähte denkbar. Gemäß einer ersten Alternative ist vorgesehen, dass zwei an den Breitseiten des Bodens umgefaltete Lappen der Bodenfaltung im Bereich ihrer Überlappung entlang einer ersten Schweißnaht verschweißt werden und dass die besagten Lappen entlang von zwei quer zur ersten Schweißnaht verlaufenden zweiten Schweißnähten mit dem jeweils darunter liegenden der an den Schmalseiten des Bodens umgefalteten Lappen verschweißt werden. Es ergibt sich also beispielsweise eine H-förmige Verschweißung.

Gemäß einer zweiten Alternative ist vorgesehen, dass mit einem an der einen Breitseite des Bodens umgefalteten Lappen der Bodenfaltung ein Deckblatt aus einem Gewebe aus monoaxial verstreckten Polymer-, insbesondere Polyolefin- oder Polypropylenbändchen verbunden, insbesondere verschweißt wird, wobei das Deckblatt im wesentlichen der Größe des Bodens entspricht, dass das Deckblatt in der Folge mit den an den Schmalseiten des Bodens umgefalteten Lappen entlang von zwei Schweißnähten verschweißt wird und dass das Deckblatt anschließend mit dem an der anderen Breitseite des Bodens umgefalteten Lappen der Bodenfaltung entlang einer Schweißnaht verschweißt wird. Das außenliegende Deckblatt wird somit an allen seinen Rändern mit den umgefalteten Lappen der Bodenfaltung verschweißt und es ergibt sich eine Verschweißung entlang eines rechteckigen Rahmens.

Gemäß einer zweiten Alternative ist vorgesehen, dass nach dem Umfalten der Lappen an den Schmalseiten des Bodens und vor dem Umfalten der Lappen an den Breitseiten des Bodens auf die Bodenfaltung ein Deckblatt gelegt wird, das an seinen vier Rändern entlang von vier Schweißnähten mit der Bodenfaltung verschweißt wird, dass danach die Lappen an den Breitseiten des Bodens gemeinsam mit dem angeschweißten Rand des Deckblatts umgefaltet werden und die an den Breitseiten umgefalteten Lappen im Bereich ihrer Überlappung entlang einer Schweißnaht miteinander verschweißt werden. Das Deckblatt ist somit innenliegend angeordnet und an allen seinen Rändern mit den umgefalteten Lappen der Bodenfaltung verschweißt, sodass sich eine Verschweißung entlang eines rechteckigen Rahmens ergibt.

Zur Vermeidung eines miteinander Verschweißens der umgefalteten Lappen der Bodenfaltung bzw. des Deckblatts mit dem Sackkörper wird erfindungsgemäß auf das Gewebe eine metallhaltige Lackschicht als Trennschicht aufgebracht. Die Trennschicht weist bevorzugt eine höhere Wärmeleitfähigkeit auf als das Sackgewebe. Die Trennschicht wird bevorzugt durch ein Beschichtungsverfahren aufgebracht. Eine derartige Trennschicht führt aufgrund des Metallgehalts zu einer Wärmeableitung, sodass die dem umgelegten Endabschnitt abgewandte Gewebelage des Sackkörpers einem geringeren bzw. im Wesentlichen keinem Wärmeeintrag unterliegt.

Die Erfindung wird nachfolgend anhand eines in der Zeichnung schematisch dargestellten Ausführungsbeispiels näher erläutert. In dieser zeigt Fig. 1 bis 3 eine erste Ausführungsvariante der Erfindung, Fig. 4 bis 7 eine zweite Ausführungsvariante der Erfindung, Fig. 8 bis 12 eine dritte Ausführungsvariante der Erfindung und Fig. 13 bis 15 verscheiden Ausführungen der Schweißnähte.

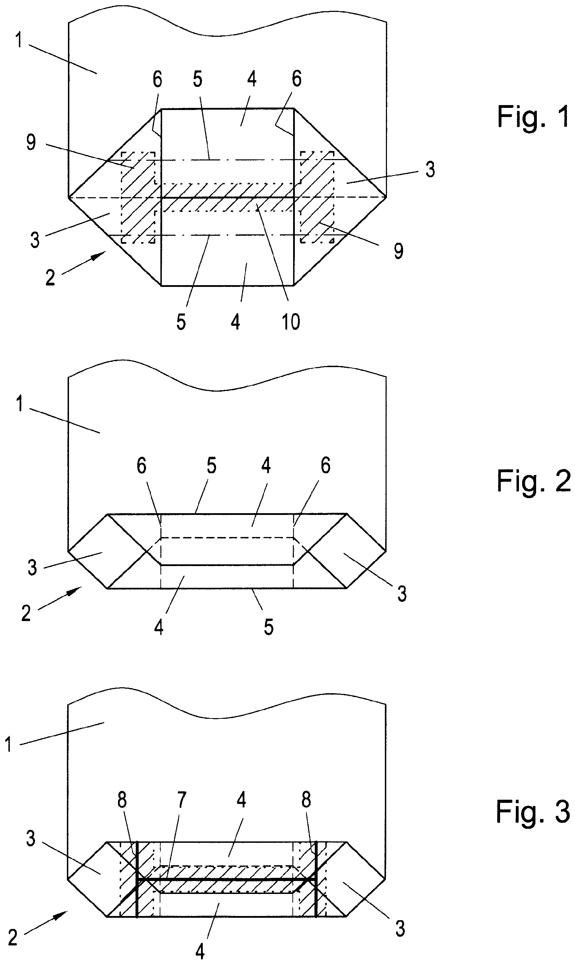

In Fig. 1 ist ein schlauchförmiger Sackkörper in flachem Zustand mit 1 bezeichnet, dessen Boden 2 durch Bodenfaltung zur Herstellung eines kastenförmigen Sackes ausgebildet ist. Die Bodenfaltung weist zwei von den beiden gegenüberliegenden Schmalseiten des Sackkörpers 1 umgefaltete Lappen 3 und zwei von den gegenüberliegenden Breitseiten des Sackkörpers 1 entlang der Faltkanten 5 umzufaltende Lappen 4 auf. Nach dem Einwärtsfalten der Lappen 4 ergibt sich der in Fig.2 dargestellte Zustand, in dem die sich von den Breitseiten einwärts gefalteten Lappen 4 einander in ihrem Endbereich überlappen, sodass der Endbereich des einen Lappens 4 strichliert dargestellt ist. Allgemein ist zu den Zeichnungen anzumerken, dass verdeckte Kanten generell mit strichlierten Linien dargestellt sind und Faltkanten mit strichpunktierten Linien.

Zum Verschließen des Bodens 2 werden die zwei an den Breitseiten des Bodens 2 umgefalteten Lappen 4 im Bereich ihrer Überlappung entlang einer Schweißnaht 7 miteinander verschweißt. Weiters werden die Lappen 4 entlang von zwei quer zur Schweißnaht 7 verlaufenden Schweißnähten 8 mit dem jeweils darunter liegenden an den Schmalseiten des Bodens 2 umgefalteten Lappen 3 verschweißt. Dabei ist entscheidend, dass die Schweißnähte 8 außerhalb der Kanten 6 der von den Schmalseiten umgefalteten Lappen 3 erfolgt. Um zu vermeiden, dass beim Herstellen der Schweißnähte 7 und 8 auch der Sackkörper 1 mitverschweißt wird, muss zuvor eine Trennlage oder eine die Verschweißung verhindernde Beschichtung aufgebracht werden. Hierzu kann eine Vollflächenbeschichtung des Gewebematerials im entsprechenden Bereich vorgenommen werden. Alternativ kann die Beschichtung oder die Trennlage lediglich im Bereich der zu erwartenden Schweißnähte aufgebracht werden. Diese Bereiche sind in Fig.1 mit 9 und 10 bezeichnet. Die Bereiche 9 befinden sich hierbei am Sackkörper unterhalb der einwärts gefalteten Lappen 3. Der Bereich 10 erstreckt sich quer hierzu.

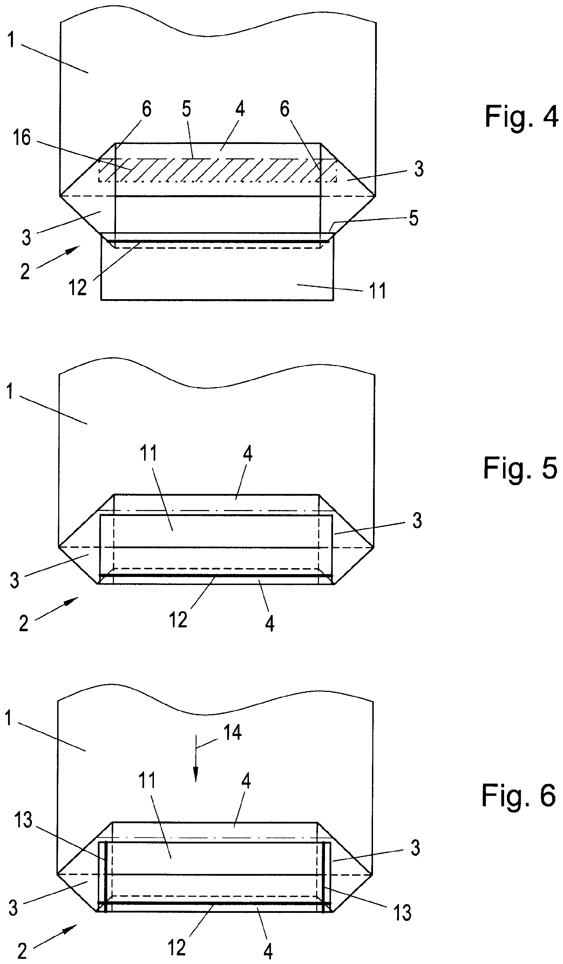

In den Fig.4 bis 7 ist eine alternative Ausbildung dargestellt. Der Ausgangszustand ist in Fig.4 dargestellt und es sind die an den Schmalseiten des Bodens einwärts gefalteten Lappen wiederum mit 3 bezeichnet und die an den Breitseiten entlang der Faltkanten 5 umzufaltenden Lappen sind mit 4 bezeichnet. Im Unterschied zur Ausbildung gemäß den Fig.1 bis 3 werden die Lappen 3 und 4 nicht unmittelbar miteinander verschweißt sondern es wird ein gesondertes Deckblatt 11 verwendet. Das Deckblatt 11 hat im Wesentlichen die Größe des zu erzielenden rechteckigen Bodens und wird in einem ersten Schritt mit einem der beiden Lappen 4 entlang einer Schweißnaht 12 verschweißt. In einem zweiten Schritt (Fig.5) wird derjenige Lappen 4, mit welchem das Deckblatt 11 verschweißt ist, entlang der Faltkante 5 umgefaltet. Dabei überlappen der rechte und der linke Rand des Deckblatts 11 die an den Schmalseiten umgefalteten Lappen 3, sodass in diesem Bereich weitere Schweißnähte 13 realisiert werden können (Fig.6). Um zu verhindern, dass die Randbereiche der umgefalteten Lappen 3 beim Herstellen der Schweißnähte 13 mit dem darunter liegenden Sackkörper verschweißt werden, kann vor der Herstellung der Schweißnähte 13 unter die Lappen 3 ein Trennblech oder dergleichen gelegt werden (nicht erfindungsgemäß, das in der Folge wieder entfernt werden kann. Das Einführen des Trennblechs kann beispielsweise in Richtung des Pfeils 14 erfolgen, d.h. von derjenigen Seite des Bodens 2, die noch offen ist.

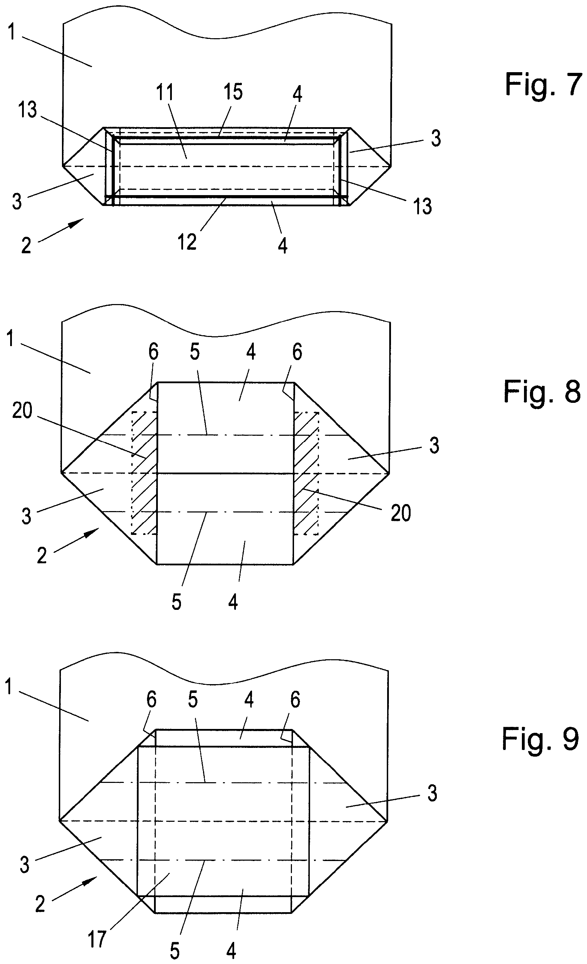

In einem weiteren Verfahrensschritt (Fig.7) wird nun der obere Lappen 4 entlang der Faltkante 5 nach innen gefaltet, sodass er den oberen Randbereich des Deckblatts 11 überdeckt. Im überdeckenden Bereich wird in der Folge die letzte Schweißnaht 15 hergestellt, sodass der Boden 2 vollständig verschlossen ist. Um bei der Herstellung der letzten Schweißnaht 15 ein miteinander Verschweißen des Deckblatts 11 mit dem darunter liegenden Sackboden zu verhindern, kann am Anfang des Verfahrens (Fig. 4) im Bereich 16 eine Trennschicht oder Trennlage aufgebracht werden.

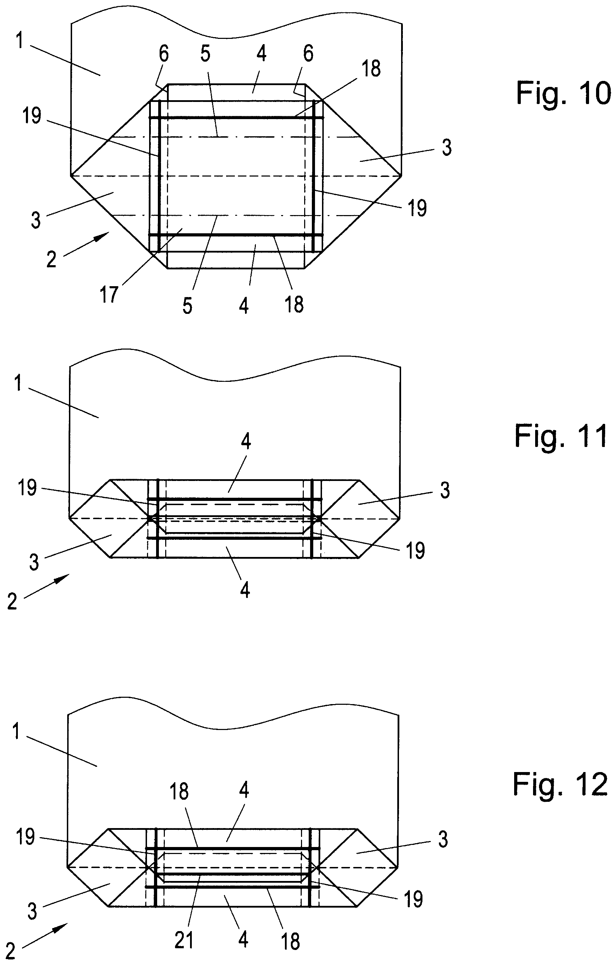

Eine weitere Ausführungsvariante ist in den Figuren 8 bis 12 dargestellt. Für gleiche Teile kommen wiederum die gleichen Bezugszeichen zum Einsatz. Im Unterschied zur Ausbildung gemäß den Figuren 4 bis 7 wird nun kein außenliegendes Deckblatt 11, sondern ein innenliegendes Deckblatt 17 verwendet. Das Deckblatt wird auf die Bodenfaltung aufgelegt bevor die Lappen 4 umgefaltet werden. Wie in Fig. 9 ersichtlich, hat das Deckblatt 17 eine solche Größe, dass es die Kanten 6 der an den Schmalseiten umgefalteten Lappen 3 und die Faltkanten 5 überragt, sodass rundherum ein ausreichender Rand für die Herstellung der Schweißnähte verbleibt. Wie in Fig. 10 ersichtlich, werden Schweißnähte 18 und 19 derart angebracht, dass die überlappenden Randbereiche des Deckblatts 17 jeweils mit den darunter liegenden Lappen 3 bzw. 4 verbunden werden. Um zu verhindern, dass die Lappen 3 mit dem darunter liegenden Sackkörper verschweißt werden, kann zuvor im Bereich 20 (Fig. 8) eine Trennschicht oder Trennlage angebracht werden. Wesentlich ist, dass die Schweißnähte 18 außerhalb der Faltkante 5 angeordnet werden, sodass diese in der Folge nicht auf Schälung, sondern nur auf Scherung belastet werden.

In der Folge (Fig. 11) werden die Lappen 4 entlang der Faltkanten 5 einwärts gefaltet, wobei diese einander wiederum überlappen. Beim Umfalten der Lappen 4 wird das Deckblatt 17 ebenfalls umgefaltet, wobei sich die Schweißnaht 18 ebenfalls im umgefalteten Bereich befindet, sodass diese im in Fig. 4 dargestellten Zustand an der Innenseite zu liegen kommt.

Abschließend (Fig. 12) werden die Lappen 4 im überlappenden Bereich mit Hilfe einer Schweißnaht 21 miteinander verbunden.

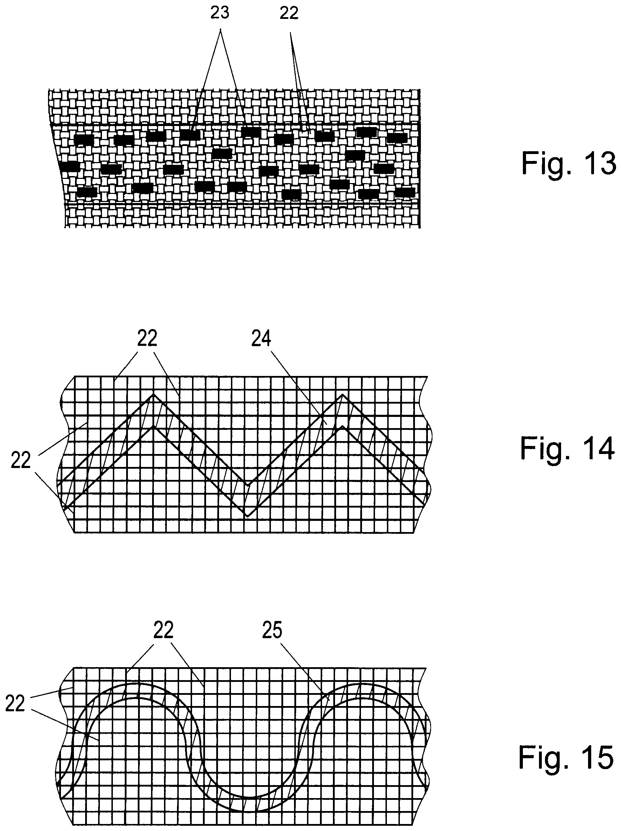

In den Figuren 13 bis 15 sind verschiedene Varianten der Schweißnähte beschrieben. Jede dieser Varianten lässt sich bei den in den Figuren 1 bis 12 dargestellten Verfahrensvarianten verwenden. In den Figuren 13 bis 15 ist lediglich ein kleiner Ausschnitt der im Allgemeinen länglichen Schweißnaht dargestellt. Die einander kreuzenden Bändchen des Sackgewebes sind mit 22 bezeichnet. Bei einer ersten Ausführungsvariante gemäß Fig. 13 umfasst die Schweißnaht eine Vielzahl von versetzt zueinander angeordneten Schweißpunkten 23. Bei der Ausbildung gemäß Fig. 14 erstreckt sich die Schweißnaht 24 zickzackförmig. Bei der Ausbildung gemäß Fig. 15 erstreckt sich die Schweißnaht 25 entlang einer Schlangenlinie.

Allen Ausführungsbeispielen gemeinsam ist, dass sich die Schweißnähte im Wesentlichen über die Längs- und/oder die Breitenerstreckung des rechteckigen Bodens 2 erstrecken, sodass allein auf Grund dieser Schweißnähte ein stabiles Verschließen des Sackes erfolgt. Weitere Maßnahmen sind grundsätzlich nicht erforderlich, im Rahmen der Erfindung jedoch nicht ausgeschlossen.

## Patentansprüche

1. Verfahren zum Verschliessen eines schlauchförmigen Sackkörpers aus einem Gewebe aus monoaxial verstreckten Polymer-, insbesondere Polyolefin- oder Polypropylenbändchen, umfassend das Herstellen einer Bodenfaltung derart, dass der Sack einen im Wesentlichen rechteckigen Boden aufweist, wobei wenigstens zwei einander wenigstens teilweise überlappende Lagen des Bodens zum Verschliessen des Bodens im Bereich ihrer Überlappung mit zumindest einer Ultraschallschweissnaht aus definierten Schweißstellen miteinander verschweisst werden, wobei sich die wenigstens eine Ultraschallschweissnaht zumindest über die Länge der Breit- und/oder der Schmalseite des rechteckigen Bodens erstreckt, **dadurch gekennzeichnet, dass** zur Vermeidung eines miteinander Verschweißens der umgefalteten Lappen der Bodenfaltung mit dem Sackkörper eine metallhaltige Lackschicht als Trennschicht aufgebracht wird, und wobei der Boden lediglich unter Verwendung der zumindest einen Ultraschallschweissnaht verschlossen wird.

2. Verfahren nach Anspruch 1, **dadurch gekennzeichnet, dass** die Ultraschallverschweissung zur Ausbildung einer nicht geradlinigen Schweissnaht, insbesondere einer zickzack förmigen Schweissnaht, vorgenommen wird.

3. Verfahren nach Anspruch 1 oder 2, **dadurch gekennzeichnet, dass** die Ultraschallverschweissung zur Ausbildung einer Ultraschallschweissnaht mit einer Vielzahl von in Abstand voneinander angeordneten Schweissstellen vorgenommen wird und die Schweissstellen einer Reihe zu den Schweissstellen einer benachbarten Reihe auf Lücke angeordnet sind.

4. Verfahren nach einem der Ansprüche 1 bis 3, **dadurch gekennzeichnet, dass** eine Mehrzahl von Ultraschallschweissnähten vorgesehen ist, wobei wenigstens eine Ultraschallschweissnaht sich im Wesentlichen über die Länge der Schmalseite des rechteckigen Bodens und wenigstens eine Schweissnaht sich im Wesentlichen über die Länge der Breitseite des rechteckigen Bodens erstreckt.

5. Verfahren nach einem der Ansprüche 1 bis 4, **dadurch gekennzeichnet, dass** zwei an den Breitseiten des Bodens umgefaltete Lappen der Bodenfaltung im Bereich ihrer Überlappung entlang einer ersten Schweissnaht ultraschallverschweisst werden und dass die besagten Lappen entlang von zwei quer zur ersten Schweissnaht verlaufenden zweiten Schweissnähten mit dem jeweils darunter liegenden der an den Schmalseiten des Bodens umgefalteten Lappen verschweisst werden.

6. Verfahren nach einem der Ansprüche 1 bis 4, **dadurch gekennzeichnet, dass** mit einem an der einen Breitseite des Bodens umgefalteten Lappen der Bodenfaltung ein Deckblatt, vorzugsweise aus einem Gewebe aus monoaxial verstreckten Polymer-, insbesondere Polyolefin- oder Polypropylenbändchen, verschweisst wird, wobei das Deckblatt im wesentlichen der Grösse des Bodens entspricht, dass das Deckblatt in der Folge mit den an den Schmalseiten des Bodens umgefalteten Lappen entlang von zwei Schweissnähten ultraschallverschweisst wird und dass das Deckblatt anschliessend mit dem an der anderen Breitseite des Bodens umgefalteten Lappen der Bodenfaltung entlang einer Schweissnaht ultraverschweisst wird.

7. Verfahren nach einem der Ansprüche 1 bis 4, **dadurch gekennzeichnet, dass** nach dem Umfalten der Lappen an den Schmalseiten des Bodens und vor dem Umfalten der Lappen an den Breitseiten des Bodens auf die Bodenfaltung ein Deckblatt, vorzugsweise aus einem Gewebe aus monoaxial verstreckten Polymer-, insbesondere Polyolefin- oder Polypropylenbändchen, gelegt wird, das an seinen vier Rändern entlang von vier Schweissnähten mit der Bodenfaltung ultraschallverschweisst wird, dass danach die Lappen an den Breitseiten des Bodens gemeinsam mit dem angeschweissten Rand des Deckblatts umgefaltet werden und die an den Breitseiten umgefalteten Lappen im Bereich ihrer Überlappung entlang einer Schweissnaht miteinander verschweisst werden.

## Claims

1. A method for sealing a tubular bag body made from a fabric of monoaxially stretched polymer, particularly polyolefin or polypropylene bands, comprising producing a base fold in such a way that the bag has an essentially rectangular base, wherein at least two at least partially overlapping layers of the base are welded to each other with at least one ultrasonic welding seam of defined welding points in the area where they overlap in order to seal the base, wherein the at least one ultrasonic welding seam extends at least over the length of the broad and/or the narrow side of the rectangular base, **characterized in that**, in order to prevent the welding together of the folded over layers of the base fold with the bag body, a metal containing lacquer layer is applied as separating layer, and wherein the base is sealed only by using said at least one ultrasonic welding seam.

2. The method in accordance with claim 1 **characterized in that** the welding is carried out in order to produce an ultrasonic welding seam which is in a non-rectilinear shape, particularly in a zig-zag shape.

3. The method in accordance with claim 1 or 2 **characterized in that** the ultrasonic welding is carried out to produce an ultrasonic welding seam with a number of welding seams arranged at intervals from each other, and that the welding points in one row are arranged at the gap between the welding points in an adjacent row.

4. The method in accordance with any one of claims 1 to 3 **characterized in that** a number of ultrasonic welding seams are provided, wherein at least one ultrasonic welding seam extends essentially over the length of the narrow side of the rectangular base and at least one ultrasonic welding seam extends essentially over the length of the broad side of the rectangular base.

5. The method in accordance with any one of claims 1 to 4 **characterized in that** two flaps of the base fold folded over on the broad side of the base are ultrasonically welded together in the area they overlap along a first welding seam and that said flaps are welded to the underlying flaps folded over on the narrow sides of the base along two welding seams running transversely to the first welding seam.

6. The method in accordance with any one of claims 1 to 4 **characterized in that** a cover sheet, made from a fabric of monoaxially stretched polymer, particularly polyolefin or polypropylene bands, is welded to a folded-over flap of the base fold on the broad side of the base, wherein the cover sheet essentially corresponds to the size of the base, that the cover sheet is then ultrasonically welded to the flap folded over on the narrow sides of the base using two welding seams, and that the cover sheet is then ultrasonically welded using a welding seam to the folded-over flap on the base fold on the other broad side of the base.

7. The method in accordance with any one of claims 1 to 4 **characterized in that** after folding over the flaps on the narrow sides of the base and before folding over the flaps on the broad side of the base, a cover sheet made from a fabric of monoaxially stretched polymer, particularly polyolefin or polypropylene bands, is placed on the base fold, followed by ultrasonic welding of said coversheet at its four edges to the base fold by four welding seams, and that the flaps on the broad sides of the base are then folded over such that the welded-on edge of the cover sheet also gets folded over, and the flaps folded over on the broad side are welded together along a welding seam in the area in which the broad-side flaps overlap.

## Revendications

1. Procédé pour fermer un corps de sac en forme de tuyau, constitué d'un tissu formé de bandelettes de polymère, en particulier de polyoléfine ou de polypropylène, étiré monoaxialement, comprenant la fabrication d'un pliage de fond, de telle sorte que le sac présente essentiellement un fond rectangulaire, au moins deux couches du fond se chevauchant au moins partiellement étant soudées l'une à l'autre pour fermer le fond dans la région de son chevauchement avec au moins un joint de soudure à ultrasons constitué de points de soudage définis, l'au moins un joint de soudage par ultrasons s'étendant sur au moins la longueur du côté large et/ou du côté étroit du fond rectangulaire, **caractérisé en ce que** pour éviter un soudage l'un à l'autre des volets repliés du pliage du fond avec le corps de sac, une couche de vernis contenant du métal est appliquée en tant que couche de séparation, le fond étant fermé seulement en utilisant l'au moins un joint de soudage par ultrasons.

2. Procédé selon la revendication 1, **caractérisé en ce que** le soudage par ultrasons est effectué pour réaliser un joint de soudage non rectiligne, en particulier un joint de soudage en forme de zigzag.

3. Procédé selon la revendication 1 ou 2, **caractérisé en ce que** le soudage par ultrasons est effectué pour réaliser un joint de soudage par ultrasons avec une pluralité de points de soudage disposés à distance les uns des autres et les points de soudage d'une rangée sont disposés au niveau des vides des points de soudage d'une rangée

4. Procédé selon l'une quelconque des revendications 1 à 3, **caractérisé en ce qu'**une pluralité de joints de soudage par ultrasons sont prévus, au moins un joint de soudage par ultrasons s'étendant essentiellement sur la longueur du côté étroit du fond rectangulaire et au moins un joint de soudage s'étend essentiellement sur la longueur du côté large du fond rectangulaire.

5. Procédé selon l'une quelconque des revendications 1 à 4, **caractérisé en ce que** deux volets du pliage de fond, repliés au niveau des côtés larges du fond, sont soudés par ultrasons dans la région de leur chevauchement le long d'un premier joint de soudage et **en ce que** lesdits volets sont soudés le long de deux deuxièmes joints de soudage s'étendant transversalement au premier joint de soudage avec le volet situé à chaque fois en dessous des volets repliés au niveau des côtés étroits du fond.

6. Procédé selon l'une quelconque des revendications 1 à 4, **caractérisé en ce qu'**avec un volet du pliage de fond replié au niveau de l'un des côtés larges du fond, est soudée une feuille de recouvrement, de préférence constituée d'un tissu formé de bandelettes de polymère, en particulier de polyoléfine ou de polypropylène, étiré monoaxialement, la feuille de recouvrement correspondant essentiellement à la taille du fond, **en ce que** la feuille de recouvrement est ensuite soudée par ultrasons avec les volets repliés au niveau des côtés étroits du fond le long de deux joints de soudage et **en ce que** la feuille de recouvrement est ensuite soudée par ultrasons avec le volet du pliage de fond replié au niveau de l'autre côté large du fond le long d'un joint de soudage.

7. Procédé selon l'une quelconque des revendications 1 à 4, **caractérisé en ce qu'**après le repliement des volets au niveau des côtés étroits du fond et avant le repliement des volets au niveau des côtés larges du fond, une feuille de recouvrement, de préférence constituée d'un tissu formé de bandelettes de polymère, en particulier de polyoléfine ou de polypropylène étiré monoaxialement, est posée sur le pliage de fond, laquelle feuille de recouvrement est soudée par ultrasons au niveau de ses quatre bords le long de quatre joints de soudage avec le pliage de fond, **en ce qu'**ensuite les volets sont repliés au niveau des côtés larges du fond conjointement avec le bord soudé de la feuille de recouvrement et les volets repliés au niveau des côtés larges sont soudés l'un à l'autre dans la région de leur chevauchement le long d'un joint de soudage.
